# EUROPEAN PATENT SPECIFICATION

(11) **EP 3 063 895 B1**
(45) Date of publication and mention of the grant of the patent: **15.03.2017**
(21) Application number: 14795927.4
(22) Date of filing: 28.10.2014
(51) Int. Cl.: H04L 5/00, H04W 72/04, H04W 74/00

(54) **ENHANCED SUBCHANNEL SELECTIVE TRANSMISSION PROCEDURE**
VERBESSETE, SELEKTIVE SUBKANALÜBERTRAGUNG
TRANSMISSION SÉLECTIVE AMÉLIORÉE SUR DES SOUS-CANAUX DE TRANSMISSION

(30) Priority: 28.10.2013 US 201361896634 P; 06.11.2013 US 201361900995 P; 27.10.2014 US 201414525085
(43) Date of publication of application: 07.09.2016
(73) Proprietor: Qualcomm Incorporated, San Diego, CA 92121-1714 (US)
(72) Inventor: ASTERJADHI, Alfred, San Diego, California 92121-1714 (US); TIAN, Bin, San Diego, California 92121-1714 (US); MERLIN, Simone, San Diego, California 92121-1714 (US); JAFARIAN, Amin, San Diego, California 92121-1714 (US)
(74) Representative: Carstens, Dirk Wilhelm
(86) International application number: PCT/US2014/062543
(87) International publication number: WO 2015/065953

(56) References cited:
- US-A1- 2012 113 952
- MATTHEW FISCHER (BROADCOM): "CC9 Resolutions for 9-32k ; 11-13-1142-02-00ah-cc9-resolutions-for-9-3 2k", IEEE DRAFT; 11-13-1142-02-00AH-CC9-RESOLUTIONS-FOR-9-3 2K, IEEE-SA MENTOR, vol. 802.11ah, no. 2, 17 September 2013 (2013-09-17), pages 1-10, XP068063065, PISCATAWAY, NJ USA [retrieved on 2013-09-17]

## Description

### BACKGROUND

### Field

The present disclosure relates generally to communication systems, and more particularly, to enhancing a subchannel selective transmission (SST) procedure in a wireless communication system.

### Background

In many telecommunication systems, communications networks are used to exchange messages among several interacting spatially-separated devices. Networks may be classified according to geographic scope, which could be, for example, a metropolitan area, a local area, or a personal area. Such networks would be designated respectively as a wide area network (WAN), metropolitan area network (MAN), local area network (LAN), wireless local area network (WLAN), or personal area network (PAN). Networks also differ according to the switching/routing technique used to interconnect the various network nodes and devices (e.g., circuit switching vs. packet switching), the type of physical media employed for transmission (e.g., wired vs. wireless), and the set of communication protocols used (e.g., Internet protocol suite, Synchronous Optical Networking (SONET), Ethernet, etc.).

Wireless networks are often preferred when the network elements are mobile and thus have dynamic connectivity needs, or if the network architecture is formed in an ad hoc, rather than fixed, topology. Wireless networks employ intangible physical media in an unguided propagation mode using electromagnetic waves in the radio, microwave, infra-red, optical, etc. frequency bands. Wireless networks advantageously facilitate user mobility and rapid field deployment when compared to fixed wired networks.

In some wireless networks, devices associated with an access point (AP) are allowed to transmit and receive signals on a primary channel selected by the AP. According to a subchannel selective transmission (SST) procedure, the devices are allowed to dynamically change a location of the primary channel within an allowed operating channel width. Improved systems, methods, and devices for the SST procedure are desired.
Attention is drawn to a document by MATTHEW FISCHER, entitled "CC9 Resolutions for 9-32k ; 11-13-1142-02-00ah-cc9-resolutions-for-9-32k", IEEE DRAFT; 11-13-1142-02-00AH-CC9-RESOLUTIONS-FOR-9-32K, IEEE-SA MENTOR, PISCATAWAY, NJ USA, (20130917), vol. 802.11ah, no. 2, PAGE 1 - 10. The document discusses various changes to the subchannel selective transmission scheme of the IEEE 802.11 standard.

### SUMMARY

In accordance with the present invention a method and apparatus for wireless communication, as set forth in the independent claims, is provided. Preferred Embodiments of the invention are claimed in the dependent claims.

The present invention is defined and limited only by the scope of appended claims 1-15. In what follows, any embodiment(s) referred to and not falling within the scope of said claims 1-15 is to be interpreted as example(s) useful to understand the invention.

### BRIEF DESCRIPTION OF THE DRAWINGS

FIG. 1 shows an example wireless communication system in which aspects of the present disclosure may be employed.
FIG. 2 shows a functional block diagram of an example wireless device that may be employed within the wireless communication system of FIG. 1.
FIG. 3A illustrates an example wireless communication timeline.
FIG. 3B illustrates an example wireless communication timeline.
FIG. 4 illustrates an example wireless communication timeline.
FIG. 5 is a diagram illustrating examples of physical channel-to-virtual channel mappings.
FIG. 6 is a diagram illustrating an example of a 16 MHz SST Operation Bandwidth.
FIG. 7 is a flowchart of an example method of wireless communication.
FIG. 8 is a functional block diagram of an example wireless communication device.

### DETAILED DESCRIPTION

Various aspects of the novel systems, apparatuses, and methods are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the invention is limited and defined only by the scope of appended claims 1-15.

Popular wireless network technologies may include various types of wireless local area networks (WLANs). A WLAN may be used to interconnect nearby devices together, employing widely used networking protocols. The various aspects described herein may apply to any communication standard, such as a wireless protocol.

In some aspects, wireless signals in a sub-gigahertz band may be transmitted according to the 802.11ah protocol using orthogonal frequency-division multiplexing (OFDM), direct-sequence spread spectrum (DSSS) communications, a combination of OFDM and DSSS communications, or other schemes. Further, wireless signals may be transmitted in 802.11ah narrowband 1 MHz or 2 MHz channels, for instance. Implementations of the 802.11ah protocol may be used for sensors, metering, and smart grid networks. Advantageously, aspects of certain devices implementing the 802.11ah protocol may consume less power than devices implementing other wireless protocols, and/or may be used to transmit wireless signals across a relatively long range, for example about one kilometer or longer.

In some implementations, a WLAN includes various devices which are the components that access the wireless network. For example, there may be two types of devices: access points ("APs") and clients (also referred to as stations, or "STAs"). In general, an AP may serve as a hub or base station for the WLAN and a STA serves as a user of the WLAN. For example, a STA may be a laptop computer, a personal digital assistant (PDA), a mobile phone, etc. In an example, a STA connects to an AP via a WiFi (e.g., IEEE 802.11 protocol such as 802.11ah) compliant wireless link to obtain general connectivity to the Internet or to other wide area networks. In some implementations a STA may also be used as an AP.

An access point ("AP") may also comprise, be implemented as, or known as a NodeB, Radio Network Controller ("RNC"), eNodeB, Base Station Controller ("BSC"), Base Transceiver Station ("BTS"), Base Station ("BS"), Transceiver Function ("TF"), Radio Router, Radio Transceiver, or some other terminology.

A station "STA" may also comprise, be implemented as, or known as an access terminal ("AT"), a subscriber station, a subscriber unit, a mobile station, a remote station, a remote terminal, a user terminal, a user agent, a user device, user equipment, or some other terminology. In some implementations an access terminal may comprise a cellular telephone, a cordless telephone, a Session Initiation Protocol ("SIP") phone, a wireless local loop ("WLL") station, a personal digital assistant ("PDA"), a handheld device having wireless connection capability, or some other suitable processing device connected to a wireless modem. Accordingly, one or more aspects taught herein may be incorporated into a phone (e.g., a cellular phone or smartphone), a computer (e.g., a laptop), a portable communication device, a headset, a portable computing device (e.g., a personal data assistant), an entertainment device (e.g., a music or video device, or a satellite radio), a gaming device or system, a global positioning system device, or any other suitable device that is configured to communicate via a wireless medium.

As discussed above, certain devices described herein may implement the 802.11ah standard, for example. Such devices, whether used as a STA or AP or other device, may be used for smart metering or in a smart grid network. Such devices may provide sensor applications or be used in home automation. The devices may instead or in addition be used in a healthcare context, for example for personal healthcare. They may also be used for surveillance, to enable extended-range Internet connectivity (e.g. for use with hotspots), or to implement machine-to-machine communications.

Wireless nodes, such as stations and APs, may interact in a Carrier Sense Multiple Access (CSMA) type network, such as a network that conforms to the 802.11ah standard. CSMA is a probabilistic Media Access Control (MAC) protocol. "Carrier Sense" describes the fact that a node attempting to transmit on a medium may use feedback from its receiver to detect a carrier wave before trying to send its own transmission. "Multiple Access" describes the fact that multiple nodes may send and receive on a shared medium. Accordingly, in a CSMA type network, a transmitting node senses the medium and if the medium is busy (i.e., another node is transmitting on the medium), the transmitting node will defer its transmission to a later time. If, however, the medium is sensed as free, then the transmitting node may transmit its data on the medium.

Clear Channel Assessment (CCA) is used to determine the state of the medium before a node attempts to transmit thereon. The CCA procedure is executed while a node's receiver is turned on and the node is not currently transmitting a data unit such as a packet. A node may sense whether the medium is clear by, for example, detecting the start of a packet by detecting the packet's PHY preamble, which may be referred to as preamble detection. Further, the node may estimate a defer time or delay time from an acknowledge (ACK) indication in a signal (SIG) field, for instance. The preamble detection method may detect relatively weaker signals. Accordingly, there is a low detection threshold with this method. An alternative method is to detect some energy on the air, which may be referred to as energy detection. Energy detection may be used to sense one or more channels at one time. The energy detection method is relatively more difficult than detecting the start of a packet and may only detect relatively stronger signals. As such, there is higher detection threshold with this method relative to preamble detection. In general, detection of another transmission on the medium is a function of the received power of the transmission, where the received power is the transmitted power minus the path loss.

While CSMA is particularly effective for mediums that are not heavily used, performance degradation may occur where the medium becomes crowded with many devices trying to access it simultaneously. When multiple transmitting nodes try to use the medium at once, collisions between the simultaneous transmissions may occur and transmitted data may be lost or corrupted. Because with wireless data communications it is generally not possible to listen to the medium while transmitting on it, collision detection is not possible. Further, transmissions by one node are generally only received by other nodes using the medium that are in range of the transmitting node. This is known as the hidden node problem, whereby, for example, a first node wishing to transmit to and in range of a receiving node, is not in range of a second node that is currently transmitting to the receiving node, and therefore the first node cannot know that the second node is transmitting to the receiving node and thus occupying the medium. In such a situation, the first node may sense that the medium is free and begin to transmit, which may then cause a collision and lost data at the receiving node. Accordingly, collision avoidance schemes are used to improve the performance of CSMA by attempting to divide access to the medium up somewhat equally among all transmitting nodes within a collision domain. Notably, collision avoidance differs from collision detection due to the nature of the medium, in this case the radio frequency spectrum.

In a CSMA network utilizing collision avoidance (CA), a node wishing to transmit first senses the medium and if the medium is busy then it defers or delays (i.e., does not transmit) for a period of time. The period of deferral is followed by a randomized backoff period (i.e., an additional period of time in which the node wishing to transmit will not attempt to access the medium). The backoff period is used to resolve contention between different nodes trying to access a medium at the same time. The backoff period may also be referred to as a contention window. Backoff requires each node trying to access a medium to choose a random number in a range and wait for the chosen number of time slots before trying to access the medium, and to check whether a different node has accessed the medium before. The slot time is defined in such a way that a node will always be capable of determining if another node has accessed the medium at the beginning of the previous slot. In particular, the 802.11 standard uses an exponential backoff algorithm wherein each time a node chooses a slot and collides with another node, it will increase the maximum number of the range exponentially. If, on the other hand, a node wishing to transmit senses the medium as free for a specified time (e.g., the Distributed Inter Frame Space (DIFS) in the 802.11 standard, or Point Coordination Function Inter Frame Space (PIFS) in other cases), then the node is allowed to transmit on the medium. After transmitting, the receiving node may perform a cyclic redundancy check (CRC) of the received data and send an acknowledgement back to the transmitting node. Receipt of the acknowledgment by the transmitting node will indicate to the transmitting node that no collision has occurred. Similarly, no receipt of an acknowledgment at the transmitting node will indicate that a collision has occurred and that the transmitting node should resend the data.

Additionally, a wireless network may implement virtual carrier sensing whereby a node wishing to transmit will first transmit a short control packet called a Request to Send (RTS) to a receiving node. The RTS may include a source, destination and duration of the transmission, including the responsive acknowledgment. If the medium is free, the receiving node will respond with a Clear to Send (CTS) message, which may include the same information as the RTS. Any node within range of either the RTS or CTS will set its virtual carrier sense indicator (also called Network Allocation Vector (NAV)) for the given duration and will defer from attempting to transmit on the medium during that period. Thus, implementing virtual carrier sensing reduces the probability of a collision at the receiving node by a hidden transmitting node. Use of RTS and CTS may also reduce overhead because the RTS and CTS message frames are relatively shorter than the full message frame intended to be transmitted by the transmitting node. That is, because the transmitting node may send and RTS and not receive a CTS, indicating that the receiver is busy, it has used less medium time as compared to sending a full data frame and not receiving an acknowledgement.

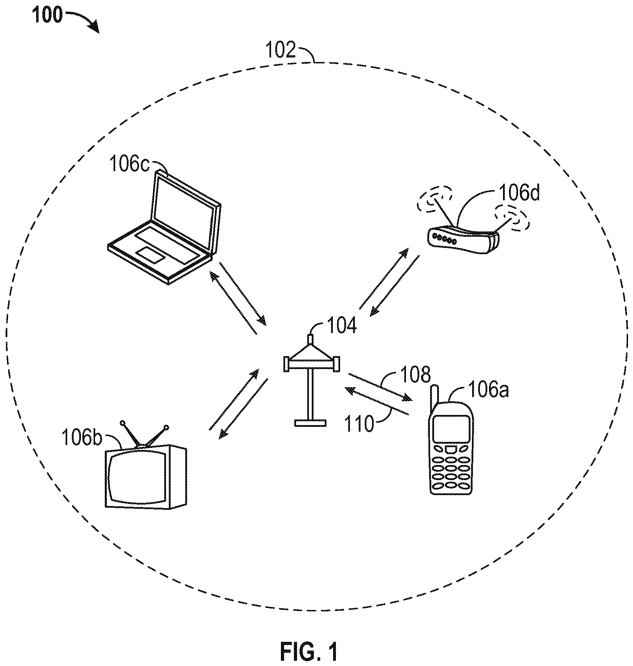

FIG. 1 shows an example wireless communication system 100 in which aspects of the present disclosure may be employed. The wireless communication system 100 may operate pursuant to a wireless standard, for example the 802.11 ah standard. The wireless communication system 100 may include an AP 104, which communicates with STAs 106.

A variety of processes and methods may be used for transmissions in the wireless communication system 100 between the AP 104 and the STAs 106. For example, signals may be sent and received between the AP 104 and the STAs 106 in accordance with OFDM/OFDMA techniques. If this is the case, the wireless communication system 100 may be referred to as an OFDM/OFDMA system. Alternatively, signals may be sent and received between the AP 104 and the STAs 106 in accordance with CDMA techniques. If this is the case, the wireless communication system 100 may be referred to as a CDMA system.

A communication link that facilitates transmission from the AP 104 to one or more of the STAs 106 may be referred to as a downlink (DL) 108, and a communication link that facilitates transmission from one or more of the STAs 106 to the AP 104 may be referred to as an uplink (UL) 110. Alternatively, a downlink 108 may be referred to as a forward link or a forward channel, and an uplink 110 may be referred to as a reverse link or a reverse channel. In some aspects, DL communications may include unicast or multicast traffic indications.

The AP 104 may suppress adjacent channel interference (ACI) in some aspects so that the AP 104 may receive UL communications on more than one channel simultaneously without causing significant analog-to-digital conversion (ADC) clipping noise. The AP 104 may improve suppression of ACI, for example, by having separate finite impulse response (FIR) filters for each channel or having a longer ADC backoff period with increased bit widths.

The AP 104 may act as a base station and provide wireless communication coverage in a basic service area (BSA) 102. The AP 104 along with the STAs 106 associated with the AP 104 and that use the AP 104 for communication may be referred to as a basic service set (BSS). It should be noted that the wireless communication system 100 may not have a central AP 104, but rather may function as a peer-to-peer network between the STAs 106. Accordingly, the functions of the AP 104 described herein may alternatively be performed by one or more of the STAs 106.

The AP 104 may transmit on one or more channels (e.g., multiple narrowband channels, each channel including a frequency bandwidth) a beacon signal (or simply a "beacon"), via a communication link such as the downlink 108, to other nodes STAs 106 of the system 100, which may help the other nodes STAs 106 to synchronize their timing with the AP 104, or which may provide other information or functionality. Such beacons may be transmitted periodically. In one aspect, the period between successive transmissions may be referred to as a superframe. Transmission of a beacon may be divided into a number of groups or intervals. In one aspect, the beacon may include, but is not limited to, such information as timestamp information to set a common clock, a peer-to-peer network identifier, a device identifier, capability information, a superframe duration, transmission direction information, reception direction information, a neighbor list, and/or an extended neighbor list, some of which are described in additional detail below. Thus, a beacon may include information both common (e.g., shared) amongst several devices, and information specific to a given device.

In some aspects, a STA 106 may be required to associate with the AP 104 in order to send communications to and/or receive communications from the AP 104. In one aspect, information for associating is included in a beacon broadcast by the AP 104. To receive such a beacon, the STA 106 may, for example, perform a broad coverage search over a coverage region. A search may also be performed by the STA 106 by sweeping a coverage region in a lighthouse fashion, for example. After receiving the information for associating, the STA 106 may transmit a reference signal, such as an association probe or request, to the AP 104. In some aspects, the AP 104 may use backhaul services, for example, to communicate with a larger network, such as the Internet or a public switched telephone network (PSTN).

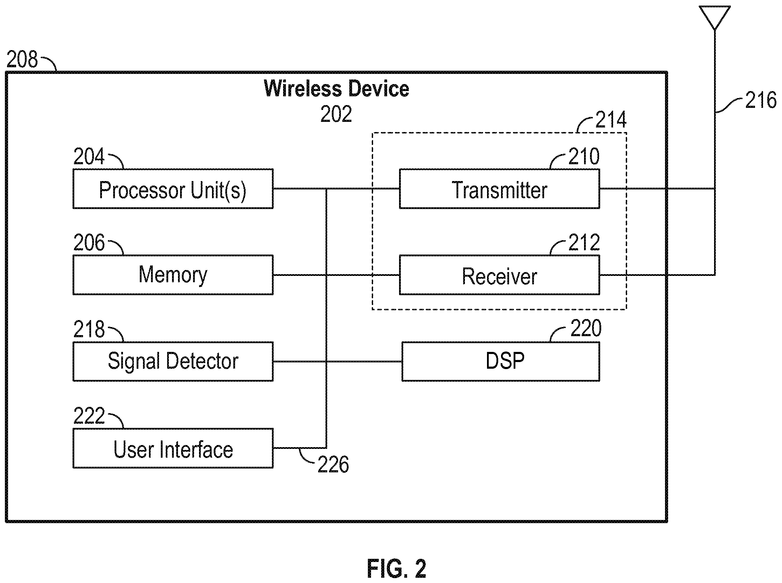

FIG. 2 shows an example functional block diagram of a wireless device 202 that may be employed within the wireless communication system 100 of FIG. 1. The wireless device 202 is an example of a device that may be configured to implement the various methods described herein. For example, the wireless device 202 may comprise the AP 104 or one of the STAs 106.

The wireless device 202 may include a processor 204 which controls operation of the wireless device 202. The processor 204 may also be referred to as a central processing unit (CPU). Memory 206, which may include both read-only memory (ROM) and random access memory (RAM), may provide instructions and data to the processor 204. A portion of the memory 206 may also include non-volatile random access memory (NVRAM). The processor 204 typically performs logical and arithmetic operations based on program instructions stored within the memory 206. The instructions in the memory 206 may be executable to implement the methods described herein.

The processor 204 may comprise or be a component of a processing system implemented with one or more processors. The one or more processors may be implemented with any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable entities that can perform calculations or other manipulations of information.

The processing system may also include machine-readable media for storing software. Software shall be construed broadly to mean any type of instructions, whether referred to as software, firmware, middleware, microcode, hardware description language, or otherwise. Instructions may include code (e.g., in source code format, binary code format, executable code format, or any other suitable format of code). The instructions, when executed by the one or more processors, cause the processing system to perform the various functions described herein.

The wireless device 202 may also include a housing 208 that may include a transmitter 210 and/or a receiver 212 to allow transmission and reception of data between the wireless device 202 and a remote location. The transmitter 210 and receiver 212 may be combined into a transceiver 214. An antenna 216 may be attached to the housing 208 and electrically coupled to the transceiver 214. The wireless device 202 may also include (not shown) multiple transmitters, multiple receivers, multiple transceivers, and/or multiple antennas.

The transmitter 210 may be configured, for example, to wirelessly transmit messages, such as polling messages that are configured to retrieve traffic pending and buffered for a device at another device. For example, the transmitter 210 may be configured to transmit polling messages generated by the processor 204, discussed above. When the wireless device 202 is implemented or used as an AP 104, the processor 204 may be configured to process polling messages. When the wireless device 202 is implemented or used as a STA 106, the processor 204 may also be configured to generate polling messages. The receiver 212 may be configured to wirelessly receive polling messages, for example.

Moreover, when the wireless device 202 is implemented or used as an AP 104, the processor 204 may be configured to set a location of a primary channel in an operating channel width ( ) (e.g., Basic Service Set (BSS) Op CW) on which a STA 106 is allowed to communicate with the AP 104 and define a set of operating channels (e.g., Subchannel Selective Transmission (SST) Op CW) which may be independent of the Op CW, wherein the set of operating channels includes a channel via which the STA 106 is allowed to change the location of the primary channel to communicate with the AP 104. The processor 204 and/or the transmitter 210 may also be configured to indicate the set of operating channels to the STA 106, indicate an offset associated with a channel of the set of operating channels to identify the location of the primary channel in the Op CW, and indicate an offset associated with the location of the primary channel in the Op CW to identify a location of the set of operating channels.

The wireless device 202 may also include a signal detector 218 that may be used in an effort to detect and quantify the level of signals received by the transceiver 214. The signal detector 218 may detect such signals as total energy, energy per subcarrier per symbol, power spectral density and other signals. The wireless device 202 may also include a digital signal processor (DSP) 220 for use in processing signals. The DSP 220 may be configured to generate a packet for transmission. In some aspects, the packet may comprise a physical layer data unit (PPDU).

The wireless device 202 may further comprise a user interface 222 in some aspects. The user interface 222 may comprise a keypad, a microphone, a speaker, and/or a display. The user interface 222 may include any element or component that conveys information to a user of the wireless device 202 and/or receives input from the user.

The various components of the wireless device 202 may be coupled together by a bus system 226. The bus system 226 may include a data bus, for example, as well as a power bus, a control signal bus, and a status signal bus in addition to the data bus. Components of the wireless device 202 may be coupled together or accept or provide inputs to each other using some other mechanism.

Although a number of separate components are illustrated in FIG. 2, one or more of the components may be combined or commonly implemented. For example, the processor 204 may be used to implement not only the functionality described above with respect to the processor 204, but also to implement the functionality described above with respect to the signal detector 218 and/or the DSP 220. Further, each of the components illustrated in FIG. 2 may be implemented using a plurality of separate elements.

The wireless device 202 may comprise an AP 104 or a STA 106, and may be used to transmit and/or receive various communications including polling messages, beacon signals, or paging messages, for example. That is, either AP 104 or STA 106 may serve as transmitter or receiver of polling messages, beacon signals, or paging messages. Certain aspects contemplate signal detector 218 being used by software running on memory 206 and processor 204 to detect the presence of a transmitter or receiver. The AP 104 and STA 106 may receive or transmit messages on one or more channels for narrowband communication. For example, the AP 104 and STA 106 may support wireless communication on eight or sixteen channels where each channel is a 1 MHz or 2 MHz frequency band.

The STA 106 (FIG. 1) may have a plurality of operational modes. For example, the STA 106 may have a first operational mode referred to as an active mode. In the active mode, the STA 106 may be in an "awake" state and actively transmit/receive data with the AP 104. Further, the STA 106 may have a second operational mode referred to as a power save mode. In the power save mode, the STA 106 may be in the "awake" state or a "doze" or "sleep" state where the STA 106 does not actively transmit/receive data with the AP 104. For example, the receiver 212 and possibly DSP 220 and signal detector 218 of the STA 106 may operate using reduced power consumption in the doze state. Further, in the power save mode, the STA 106 may occasionally enter the awake state to listen to messages from the AP 104 (e.g., paging messages configured to indicate to wireless devices whether or not the wireless devices have traffic pending and buffered at another device) that indicate to the STA 106 whether or not the STA 106 needs to "wake up" (e.g., enter the awake state) at a certain time so as to be able to transmit/receive data with the AP 104.

Accordingly, in certain wireless communication systems 100 (FIG. 1), the AP 104 may transmit paging messages to a plurality of STAs 106 in a power save mode in the same network as the AP 104, indicating whether or not the STAs 106 need to be in an awake state or a doze state. For example, if a STA 106 determines it is not being paged it may remain in a doze state. Alternatively, if the STA 106 determines it may be paged, the STA 106 may enter an awake state for a certain period of time to receive the page and further determine when to be in an awake state based on the page. Further, the STA 106 may stay in the awake state for a certain period of time after receiving the page. In another example, the STA 106 may be configured to function in other ways when being paged or not being paged that are consistent with this disclosure. For example, the page may indicate that the STA 106 should enter an awake state for a certain period of time because the AP 104 has data to transmit to the STA 106. The STA 106 may poll the AP 104 for data by sending the AP 104 a polling message when in the awake state for the period of time. In response to the polling message, the AP 104 may transmit the data to the STA 106. In some aspects, paging messages may comprise a bitmap (not shown), such as a traffic identification map (TIM). In certain such aspects, the bitmap may comprise a number of bits. These paging messages may be sent from the AP 104 to STAs 106 in a beacon or a TIM frame. Each bit in the bitmap may correspond to a particular STA 106 of a plurality of STAs 106, and the value of each bit (e.g., 0 or 1) may indicate whether the particular STA 106 has traffic pending and buffered at the AP 104.

Still referring to FIG. 1, the STA 106 may estimate the quality of one or more channels based on one or more messages received from the AP 104. For example, in some implementations the STA 106 may receive a beacon signal, paging message, or a partial packet including a preamble portion on one or more of eight different 2 MHz channels or one or more of 16 different 1 MHz channels from the AP 104. The STA 106 may estimate the signal to noise ratio for one or more of the 1 or 2 MHz channels based on the received message. The greater the signal to noise ratio, the higher the estimated quality of the channel determined by the STA 106. Accordingly, the STA 106 may then determine the relative quality of multiple channels based at least in part on the estimated quality of each channel. In some aspects, the STA 106 may listen to more than one channel simultaneously to estimate the quality of each channel.

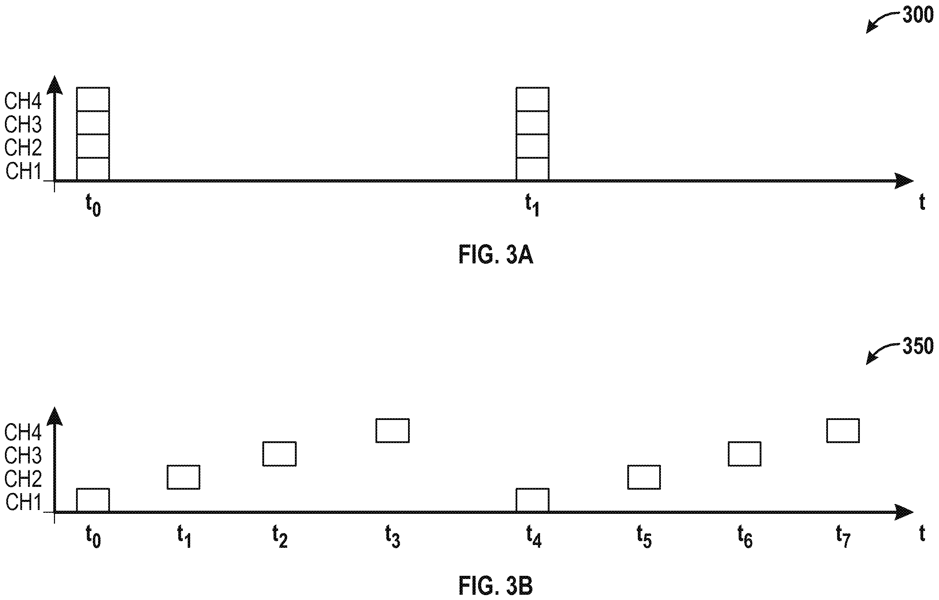

Also, in some aspects, the STA 106 may utilize different approaches to estimate the quality of channels depending on an operating mode of an AP 104 or channel conditions. For instance, if the AP 104 changes channels infrequently (e.g., coherence time >> beacon interval), the STA 106 may estimate the quality of one or more channels based on a beacon signal. If the AP 104 changes channels frequently (e.g., coherence time ≈ beacon interval), the STA may estimate the quality of one or more channels based on a Null Data packet (NDP) transmitted by the AP 104. Further, in some aspects, the AP 104 may reserve a channel estimation period following a beacon signal. During the channel estimation period, the AP 104 may, for example, send NDPs over one or more channels. The AP 104 may send NDPs or beacon frames over all or a portion of the one or more channels simultaneously (for example, in all 1 MHz or 2MHz channels), as illustrated in communication timeline 300 of FIG. 3A. For instance, the AP 104 may transmit NDPs or beacon frames simultaneously on channels 1 (CH1), 2 (CH2), 3 (CH3), and 4 (CH4) at times to and t₁. In some implementations, the AP 104 may send one or more NDPs over the one or more channels at different times, as illustrated in communication timeline 350 of FIG. 3B. For instance, the AP 104 may transmit one NDP on CH1 at time t₀, another NDP on CH2 at time t₁, and continue to transmit one NDP on one channel through times t₂, t₃, t₄, t₅, t₆, and t₇. In some implementations, the AP 104 may send one or more beacon frames over the one or more channels at different Target Beacon transmit times (TBTTs). For instance, the AP 104 may transmit one beacon frame on CH1 at time t₀, another beacon frame CH2 at time t₁, and continue to transmit one beacon frame on one channel through times t₂, t₃, t₄, t₅, t₆, and t₇.

In some implementations, the AP 104 may be configured to receive packets on any channel at any time. In some implementations, an AP 104 with an operating bandwidth greater than 2MHz may operate by setting its primary channel on one of the 1 or 2 MHz channels within its operating bandwidth. The AP 104 may also be configured to receive only packets on a primary channel. If the AP 104 is configured to receive packets on any channel, the STA 106 may be configured to commence transmitting to AP 104 at any time on any channel, without having to indicate which channel may be used. If the AP 104 is configured to receive packets on only the primary channel, the STA 106 may be configured to indicate to the AP 104 on which channel the STA 106 will transmit to the AP 104, using a configuration packet or another method.

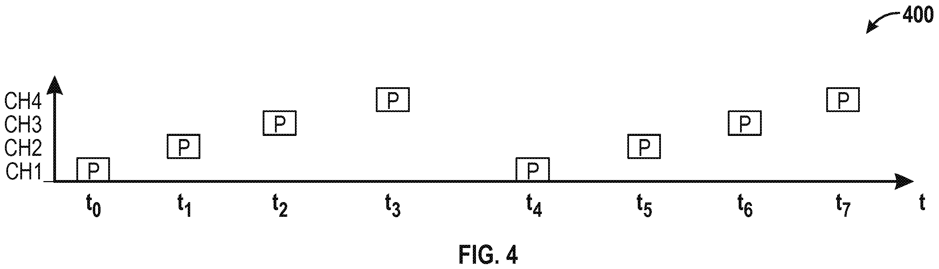

The AP 104 may use the same channel as a primary channel, such as a pre-negotiated or pre-defined frequency band (e.g., the lowest frequency band channel) of a plurality of channels, or may change primary channels. The AP 104 may, for example, change which channel is the primary channel during regularly-spaced intervals or during other intervals which may not be regularly-spaced. In some implementations, the AP 104 may send an NDP or a beacon frame over each channel individually in regularly-spaced intervals, and may use the channel that it most recently sent an NDP or a beacon frame over as the primary channel, until the next NDP or beacon frame is sent on another channel, as illustrated in communication timeline 400 of FIG. 4. For instance, the AP 104 may transmit one NDP or beacon frame on CH1 at time t₀, another NDP on CH2 at time t₁, and continue to transmit one NDP on one channel through times t₂, t₃, t₄, t₅, t₆, and t₇ to periodically change the primary channel of the AP 104. The STAs that may be associated with the AP 104 may be informed of the position of the primary channel (either a position of a current primary channel by receiving a frame in that channel or a position of a next primary channel by including information for the next primary channel in the received frame). The switching of the primary channel may be conveyed to the STAs by the AP 104 as a schedule provided at association or later through a management exchange with the STAs. This information may be included in a beacon signal. For example, IEEE (Extended) Channel Switch Announcement frames or other elements (e.g., Subchannel Selective Transmission Element) may be used to indicate the switch from one channel to another. Elements may be enhanced by including information on further future channel switches as well.

A STA 106 may not switch channels when the AP 104 informs the STA 106 of the change of primary channels. Instead, the STA 106 may stay on its selected channel even after the AP 104 has moved to another channel. The STA 106 in this case may not send packets to the AP 104, as the operating channel or channels of the AP 104 may not include the selected channel of the STA 106. The STA 106 may resume operation with the AP 104 as soon as the AP returns the primary channel to a channel which includes the STA 106 operating channel. In some implementations, the AP 104 may not indicate to the STA 106 which channel the AP 104 is switching to. If the STA 106 is not going to switch channels, the AP 104 may alert the STA 106 when the AP 104 will be on the selected channel of the STA 106, rather than alerting the STA 106 of what channel the AP 104 will be on. In some implementations, the AP 104 may indicate when its operation on a channel is starting and ending, such that STAs on a channel will be aware when the AP 104 is on the channel. In this case, the BSS on a given channel may only be active for the portion of time the AP 104 is on that channel. The AP 104 may use the same basic service set identification (BSSID) and service set identification (SSID) on multiple channels, or it may use different BSSIDs for different channels. In addition, the AP 104 may send beacon frames that include different information that depend on the channel where the beacon frame is transmitted.

The STA 106 may select a channel with the highest quality for transmission of messages or data. Advantageously, since 1 MHz or 2 MHz channels may need a higher multipath fading margin due to less frequency diversity than a 20 MHz channel, for instance, a 1 MHz or 2 MHz channel with the highest quality may have a lower multipath fading margin than another channel. Thus, the STA 106 may also be able to successfully transmit data on the selected channel at a higher transmission rate, for example.

In some implementations, the STA 106 associated with the AP 104 transmits and receives packets on channel(s) indicated by the AP 104 as the allowed operating channels for the BSS, e.g., BSS Operating Channel Width (Op CW). Generally, the AP 104 may select one channel (e.g., primary channel number (PCN)) or a subset of channels from the allowed operating channels of the BSS Op CW and use the selected channel(s) as the primary channel(s). In the primary channel, the STAs 106 associated with the AP 104 of the BSS perform back-off procedures, transmit packets and/or exchange management frames with each other. The remaining operating channels that are not selected as primary channels are used as secondary channels. The secondary channels may be used by the STAs 106 to expand the bandwidth of transmitted PPDUs to increase transmission rates.

The AP 104 setting up a BSS may specify the BSS Op CW (e.g., from 1 MHz to 16 MHz) and the location of the primary channel (PCN) within the BSS Op CW. In an example, the AP 104 setting up a BSS may specify a BSS Op CW of 8 MHz, select a 2 MHz primary channel, and define a remaining six channels as secondary channels. In an aspect, when the AP 104 sets up the BSS, the AP 104 may maintain a same set of primary channels within the BSS Op CW and may change the primary channels using channel switch procedures, which may have relatively long switch times. STAs 106 that are associated with the AP 104 may know in advance the location of the primary and secondary channels during their association period and may not be allowed to transmit in channels that are not (or do not include) the primary channels.

In some implementations, a subchannel selective transmission (SST) procedure may be provided to allow STAs 106 configured for SST to dynamically change the location of the primary channel(s) (e.g., every beacon interval or every multiple sub-intervals within a beacon interval). A STA 106 configured for SST may choose a subset of the allowed operating channels of the BSS Op CW on which to operate and use the subset of channels as a (temporary) primary channel.

The AP 104 can dynamically signal a subset of SST channels that a STA 106 (or group of STAs) is permitted to use for an interval of time. The subset of the permitted SST channels may be signaled by including an SST element in a (short) beacon or management (or control) frame, for example. The signaling may include the channels that a STA 106 is allowed to access, a maximum bandwidth of the transmitted PPDUs, and a start time for accessing the channels. The SST element may have the following format:

| | Sounding Option | Channel Activity Bitmap | UL Activity | DL Activity | Maximum Transmission Width | Activity Start Time |
|---|---|---|---|---|---|---|
| Bits | 1 | 8 | 1 | 1 | 2 | 19 |

Referring to the SST element above, the Channel Activity Bitmap subfield contains a bitmap indicating channels on which transmission activity is expected or permitted at a given time. The UL Activity subfield and the DL Activity subfield contain bits indicating whether STAs 106 associated with the AP 104 that transmits the UL Activity/DL Activity subfield are permitted to transmit/scheduled to receive on the channel(s) identified by the Channel Activity Bitmap and the Maximum Transmission Width subfield at the time indicated by the Activity Start Time subfield.

The Maximum Transmission Width subfield indicates a maximum permitted PPDU bandwidth for a transmission on an indicated channel. The Activity Start Time subfield contains a value that defines a start time for when the AP 104 expects activity on the channel(s) indicated in the corresponding Channel Activity Bitmap subfield. The start time may be equal to a next time, starting from the transmission of a frame containing the Activity Start Time subfield, when the 19 least significant bits of a timing synchronization function (TSF) for the BSS match the value in the Activity Start Time subfield.

In some implementations, the AP 104 intending to setup the BSS supporting the SST procedure may prefer to indicate a BSS Op CW that is wide enough (e.g., 16 MHz) to fully benefit from the SST procedure. For example, the wide bandwidth provides the STA 106 with more channel options (e.g., increased number of available channels) for changing a location of the primary channel. However, this may not be possible for various reasons, such as spectrum regulatory limitations in certain countries that limit BSS operation to a certain subset of channels, e.g., BSS operation is limited to a BSS Op CW of 1 MHz or 2 MHz only. Hence, coupling the SST functionality to the BSS Op CW may not be desirable as it reduces the benefits of the SST.

In some aspects, the SST procedure may be improved to allow the AP 104 to setup SST channels independent of the BSS Op CW. The AP 104 may specify a set of allowed operating channels for the SST procedure, e.g., SST Operating Channel Width (SST Op CW), which may be independent of the BSS Op CW or include the BSS Op CW as a subset of the SST Op CW. The AP 104 supporting SST may advertise the SST Op CW in an element (e.g., (S1G) Capabilities element), which may be included in a (short) beacon, probe/association responses, and other management frames. The SST Op CW indicates the set of allowed channels that STAs 106 associated with the AP 104 can expect to use in the SST procedure. In an aspect, the SST Op CW may include channels associated with the BSS Op CW (including primary channel(s) associated with the BSS Op CW). In another aspect, the SST Op CW does not include any channels associated with the BS Op CW and may be off-channel with respect to the location of the BSS Op CW.

In some implementations, the SST Op CW may map physical channels that are not necessarily contiguous to a set of virtual channels that may be virtually contiguous. The AP 104 may signal the physical channel-to-virtual channel mapping to associated STAs 106 via management frames. Alternatively, the AP 104 may use known pre-defined mappings. Moreover, the SST Op CW may be based on a set of contiguous physical channels that are adjacent to (and/or may include) the PCN of the BSS Op CW. The physical channels may also be an "offset" number of channels apart where the offset may be a signed integer that can be signaled by an offset field of 3 bits or more which may be included in the SST element, in the (S1G) Capabilities element, or in general any element, that may be included in a beacon, association requests/responses, or management frames.

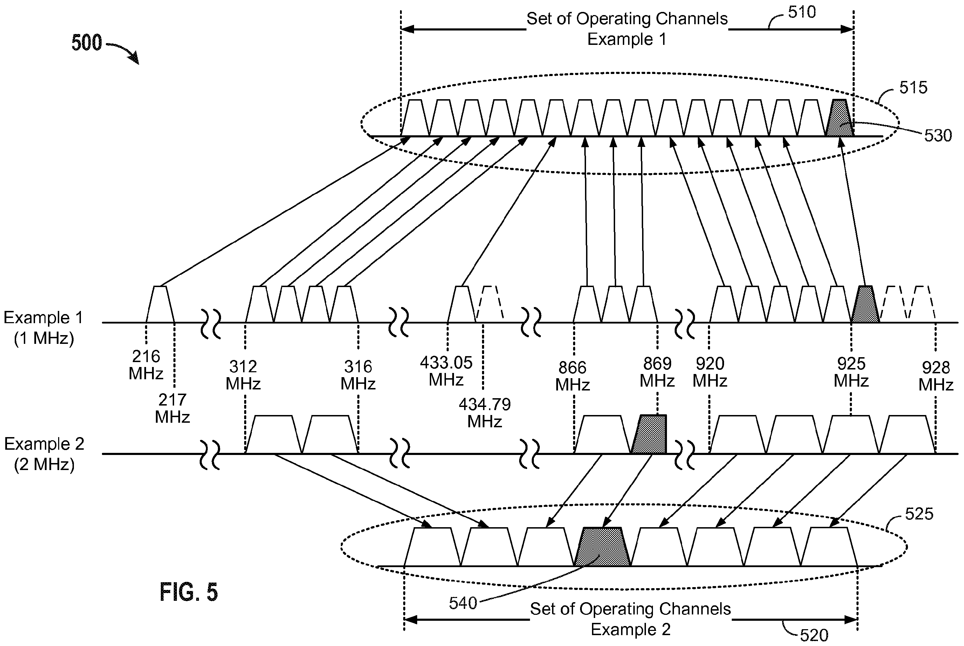

FIG. 5 is a diagram 500 illustrating examples of physical channel-to-virtual channel mappings. In a first example (Example 1), a set of operating channels (e.g., SST Op CW) 510 may include a set of virtual channels 515 that are mapped to physical channels that are not necessarily contiguous. In Example 1, the AP 104 may be assumed to have setup a BSS with a BSS Op CW of 1 MHz. In a second example (Example 2), a set of operating channels (e.g., SST Op CW) 520 may include a set of virtual channels 525 that are mapped to physical channels that are not necessarily contiguous. In Example 2, the AP 104 may be assumed to have setup a BSS with a BSS Op CW of 2 MHz. The PCN may be one of the channels included in the set of operating channels 510 (e.g., PCN 530) or the set of operating channels 520 (e.g., PCN 540), or may be located elsewhere (e.g., off-SST operation band).

In some implementations, while the location of the primary channel(s) may be known to the STA 106 within the BSS Op CW, the location of the primary channel(s) may not be known when the SST Op CW is used. Hence, the AP 104 may provide an offset to indicate the location of the primary channel (or PCN). The offset may indicate the location of the primary channel (or PCN) with respect to a current temporary primary channel. Alternatively, the offset may indicate the location of the current temporary primary channel with respect to the primary channel (or PCN).

In an aspect, the AP 104 may include a Primary Channel Offset field to the SST element or any other element (e.g., in the S1G Capabilities element). The Primary Channel Offset field may indicate a position of the primary channel (or PCN) within, or with respect to, the SST Op CW. The offset may be represented by different placeholders (e.g., channel numbers, bits, etc.) within the SST Op CW or the Channel Activity Bitmap (CAB) field. The relative position of the primary channel (or PCN) may be indicated with respect to a lowest channel identified by a lowest bit in the CAB field. Alternatively, the relative position of the primary channel (or PCN) may be indicated with respect to a highest channel identified by a highest bit in the CAB field. For example, if a Primary Channel Offset is 3 bits, the position of the primary channel (of 2 MHz) can be uniquely identified in a CAB of 8 bits (each bit indicating a SST channel of 2 MHz). Identification of a 1 MHz primary channel can be identified by an additional bit, which may locate the 1 MHz primary channel within the 2 MHz primary channel as a lower channel or upper channel of the 2 MHz primary channel. The location of the 1 MHz primary channel may also be predefined.

In another aspect, the AP 104 may include a SST Op CW Offset field to the SST element or any other element (e.g., in the S1G Capabilities element). The SST Op CW Offset field may indicate the position of the SST Op CW with respect to an existing primary channel (or PCN). Given that the AP 104 may have setup a BSS with a primary channel and BSS Op CW, the location of the primary channel may already be known by the STAs 106 associated with the AP 104. Hence, the STAs 106 configured for the SST procedure may use the SST Op CW Offset to identify the location of the SST Op CW and eventually temporary primary channel(s) for one or more activity start times specified in the SST element. The SST Op CW may be out-of-band with respect to the BSS Op CW. For example, the SST Op CW Offset may have a length of 3 bits and indicate the relative location of a lowest bit in the Channel Activity Bitmap with respect to the primary channel location (physical channel mapping or virtual channel mapping). Hence, if the primary channel is identified as 5 for a given mapping (e.g., virtual mapping), the SST Op CW Offset having a value 4 may indicate that the SST operation is allowed in channels 9 through 16 (assuming the channels are divided by a unit of 2 MHz and an SST Op CW of 16 MHz). In another example, the SST Op CW Offset may have a length of 4 bits and include an indication indicating whether the SST Op CW is located above or below the primary channel location. In addition, the SST Op CW Offset may be a signed integer that identifies the SST Op CW located in an upper portion or lower portion of the band with respect to the BSS Op CW (or PCN).

In an implementation, one or more bytes may be added to the SST element to include one of the offset fields discussed above. The one or more bytes may include one or more offsets having a size from 2 to 8 bits, for example. Other information may be added to the offset field. For example, 1 bit may be added to indicate the location of the primary 1 MHz channel within the primary 2 MHz channel. Hence, the primary location may be signaled dynamically on a per SST element basis, S1G element basis, or per Activity Start Time basis. In another implementation, to include one of the offset fields discussed above, a length of the Activity Start Time field may be reduced from 19 to (19 - offset size). For example, if the length of the offset field is 3 bits, then the Activity Start Time field is reduced to 16 bits (19 bits - 3 bits = 16 bits).

In general, the offset description described above may be applied to multiple elements that provide similar signaling, e.g., a target wake time (TWT) element or a Restricted Access Window (RAW) Parameter Set (RPS) element.

In an aspect, a granularity of the Channel Activity Bitmap (CAB) field may be reduced. The CAB field may have a length of 8 bits and identify the locations of 2 MHz channels in the SST Op CW. To have a lower granularity, e.g., identify the locations of 1 MHz channels of the SST Op CW, the CAB field may be expanded to 2 bytes (16 bits), each bit identifying a 1 MHz channel of the SST Op CW.

In some implementations, the STA 106 associated with a "wide bandwidth" BSS may perform a "narrowband" subchannel selective transmission (SST). In an aspect, the STA 106 that wishes (or is limited) to operate on a 1 MHz or 2 MHz channel of a BSS supporting a wider bandwidth (e.g., BSS Op CW of 16 MHz) may find a best channel within the wider bandwidth and send/receive frames on that channel. The SST turns the narrowband transmission from a disadvantage to an advantage because the STA 106 can operate on a peak of a channel.

Wide bandwidth (Wide BW) operation may be tied to the BSS Operation BW. Hence, it may not be possible to perform the SST procedure if the BSS has a limited operation bandwidth (e.g., 1 MHz BSS or 2 MHz BSS). To enable SST operation in a BSS with a limited operation bandwidth, wide bandwidth operation may be separated from (but may include) the BSS Operation BW.

In an aspect, wide bandwidth operation may be defined as an SST Operation BW that expands the BSS Operation BW. For example, the AP 104 that sets up a BSS with a 2 MHz BSS Operation BW may indicate operation in a 16 MHz SST Operation BW. STAs 106 that support SST can selectively transmit in any of the 16 MHz subchannels according to predefined SST procedures.

In the SST Operation BW, a location of the BSS primary channel may be unclear (unknown) to the STA 106 at each activity start time. Accordingly, the AP 104 may include an offset to the BSS primary channel in the SST element. The offset may locate the primary channel at activity start time in the Channel Activity Bitmap (CAB). The offset to the primary channel within the CAB allows STAs 106 that support SST to fall back to normal BSS operation.

In an aspect, the SST Operation element may have the following format:

| | Element ID | Length | SST Enabled Channel Bitmap | Primary Channel Offset | Maximum Transmission Width | Reserved |
|---|---|---|---|---|---|---|
| Bits | 8 | 8 | 8 | 3 | 2 | 3 |

The SST Operation element may include an SST Enabled Channel Bitmap field, a Primary Channel Offset field, and a Maximum Transmission Width field. The SST Enabled Channel Bitmap field may indicate a set of channels that SST-supporting STAs 106 may use for SST operation e.g., indicate a number of channels that are enabled for communication. The communication may include transmission, reception, or both transmission and reception. The BSS may operate in a subset of the indicated set of channels (including the primary channel). The Primary Channel Offset field may indicate the location of the primary channel in the SST Enabled Channel Bitmap. The Maximum Transmission Width field may indicate a maximum allowed bandwidth of PPDUs transmitted by the SST-supporting STAs 106. Notably, indicating the maximum allowed bandwidth of the PPDUs in an independent element allows the information to be used for a target wake time (TWT) element or a Restricted Access Window (RAW) Parameter Set (RPS) element. The SST Operation element may optionally include a Minimum Channel Unit field that may indicate a bandwidth of each channel in the SST Enabled Channel Bitmap (e.g., either 1 MHz or 2 MHz).

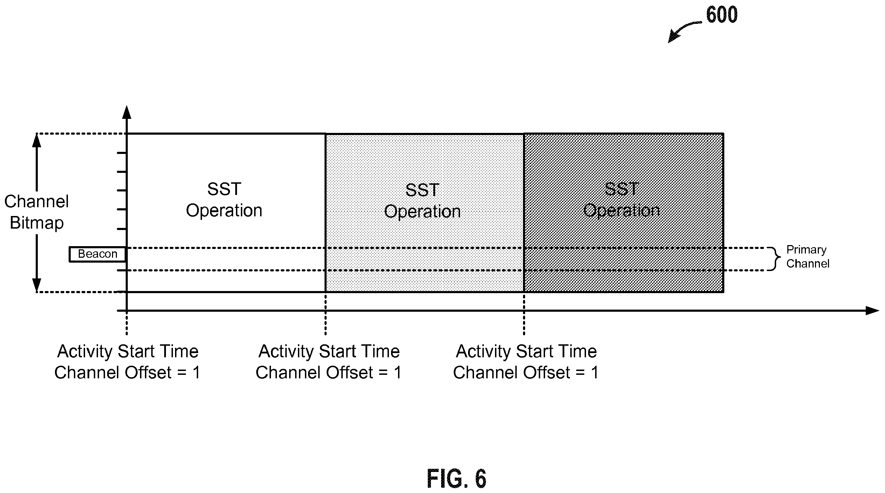

FIG. 6 is a diagram 600 illustrating an example of a 16 MHz SST Operation Bandwidth. In some implementations, STAs 106 by default may operate in a BSS primary channel (e.g., 2 MHz) and may follow respective BSS Operation CW restriction procedures. The SST Operation element may indicate an SST Enabled bandwidth of 16 MHz, wherein a primary channel location may be specified to position 1 within the SST Enabled Channel Bitmap. The AP 104 may further indicate permission/restriction to reduce/increase the bandwidth for PPDU transmission over the SST channels. A Channel Activity Bitmap (CAB) may also be used as described above. The CAB may indicate channels that are enabled for UL/DL at a given time based on narrow 2 MHz subchannels over a 16 MHz SST Operation BW.

In some implementations, the Primary Channel Offset field may indicate the primary channel location of the BSS (and the BSS Operation BW). For example, the Primary Channel Offset field may provide static indication throughout an SST Operation (SST BW max usable BW). Additionally or alternatively, the Primary Channel Offset may provide dynamic indication throughout the SST Operation (2*SST BW max usable BW). The CAB field may indicate channels that are enabled for UL/DL at a given time based on narrow 2 MHz subchannels over a 16 MHz SST Operation BW. The Maximum Transmission Width field may have a length of two bits with mapping for 2, 4, 8, and 16 MHz transmissions. The Maximum Transmission Width field may be expanded to a length of three bits with mapping for 1, 2, 4, 8, and 16 MHz transmissions.

In an aspect, the SST element may have the following format:

| | Sounding Option | Channel Activity Bitmap | UL Activity | DL Activity | Maximum Transmission Width | Primary Channel Offset | Activity Start Time |
|---|---|---|---|---|---|---|---|
| Bits | 1 | 8 | 1 | 1 | 2 | 3 | 16 |

In some implementations, Channel Activity Schedule fields of the SST element may contain the Channel Activity Bitmap field that indicates the channels that are enabled for UL/DL at a given time. This allows for the STA 106 to select 2 MHz channels over a 16 MHz "Wide BW" operation. Other information included in the Channel Activity Schedule fields of the SST element and useful to STAs 106 supporting SST includes Activity Start Time, Type of Activity (UL/DL), Maximum Transmission Width, Primary Channel Offset, etc. In the SST Operation BW, a location of the BSS primary channel may be unclear (unknown) to the STA 106 at each activity start time. Accordingly, the AP 104 may include an offset to the BSS primary channel in the SST element. The offset may locate the primary channel at activity start time in the channel activity bitmap (CAB).

In general, the offset description described above may be applied to multiple elements that provide similar signaling, e.g., a target wake time (TWT) element or a Restricted Access Window (RAW) Parameter Set (RPS) element.

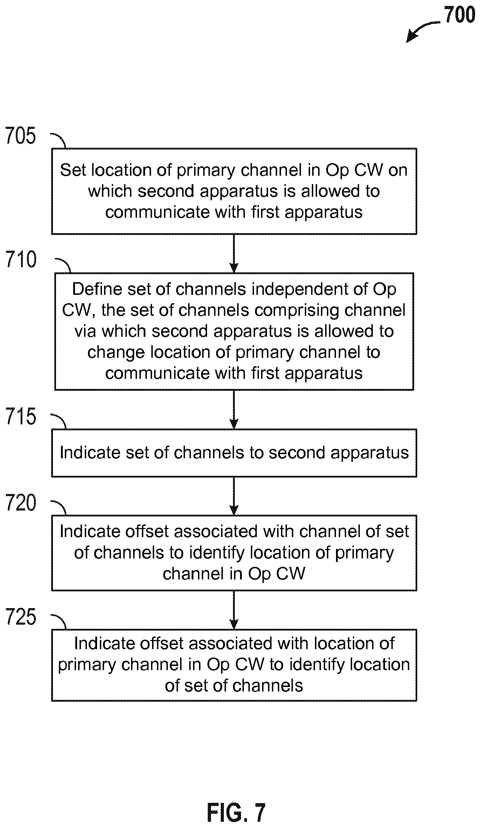

FIG. 7 is a flowchart of an example method 700 of wireless communication. The method 700 may be performed using a first apparatus (e.g., the wireless device 202 of FIG. 2, for example). Although the process 700 is described below with respect to the elements of wireless device 202 of FIG. 2, other components may be used to implement one or more of the steps described herein.

At block 705, the first apparatus may set a location of at least one primary channel in an operating channel width (Op CW) on which a second apparatus is allowed to communicate with the first apparatus. The term "communicate" may include transmit, receive, or both transmit and receive. Setting the location of the at least one primary channel may be performed by the processor 204, for example.

At block 710, the first apparatus may define a set of operating channels (e.g., SST Op CW), which may be independent of the Op CW. The set of operating channels may be defined based on a number of channels available to the second apparatus to communicate with the first apparatus. The set of operating channels may include at least one channel via which the second apparatus is allowed to change the location of the at least one primary channel to communicate with the first apparatus. In an aspect, at least one channel associated with the Op CW is associated with the set of operating channels. In another aspect, no channel associated with the Op CW is associated with the set of operating channels. Defining the set of operating channels may be performed by the processor 204, for example.

At block 715, the first apparatus may indicate the set of operating channels to the second apparatus. Indicating the set of operating channels may include indicating a location of each of the at least one channel of the set of operating channels via a channel activity bitmap (CAB). The CAB may include at least one bit, wherein each bit identifies a channel of the set of operating channels. In an aspect, the CAB includes 16 bits, wherein each bit identifies a 1-MHz channel of the set of operating channels. Indication of the set of operating channels may be performed by the processor 204 and/or the transmitter 210, for example. In another aspect, the CAB includes 8 bits, wherein each bit identifies a X-MHz channel of the set of operating channels, where X is defined as the primary channel width the AP 104 has set up for the BSS Operation. For example, if the AP 104 sets up a 2 MHz BSS, then each bit respectively identifies a 2 MHz channel of the set of operating channels.

In a further aspect, indicating the set of operating channels may include indicating a bitmap specifying a number of channels enabled for communication (e.g., SST Enabled Channel Bitmap), indicating an offset associated with at least one channel specified by the bitmap to identify the location of the at least one primary channel in the Op CW (e.g., Primary Channel Offset), indicating a bandwidth of each channel specified by the bitmap (e.g., Minimum Channel Unit), and/or indicating a maximum bandwidth for the second apparatus to transmit a data unit (e.g., Maximum Transmission Width).

At block 720, the first apparatus may indicate an offset associated with at least one channel of the set of operating channels to identify the location of the at least one primary channel in the Op CW. At block 725, the first apparatus may indicate an offset associated with the location of the at least one primary channel in the Op CW to identify a location of the set of operating channels. Indication of either offset may be performed by the processor 204 and/or the transmitter 210, for example. Note that while the above description refers to an offset, in general any type of identification of the primary channel may be suitable. For example, the primary channel in the second Op CW may also be identified by an additional Primary Channel Number, e.g., SST PCN. In general, the relative location of the two primary channels may be signaled in various ways.

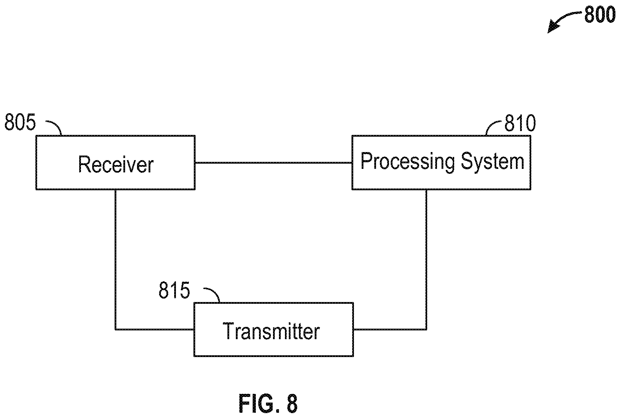

FIG. 8 is a functional block diagram of an example wireless communication device 800. The wireless communication device 800 may include a receiver 805 configured to wirelessly receive messages from a second device over a plurality of channels. The receiver 805 may correspond to the receiver 212. The wireless communication device 800 may further include a processing system 810 configured to set a location of at least one primary channel in an operating channel width (Op CW) on which the second device is allowed to communicate with the wireless communication device 800, define a set of operating channels independent of the Op CW, the set of operating channels comprising at least one channel via which the second device is allowed to change the location of the at least one primary channel to communicate with the wireless communication device 800, indicate the set of operating channels to the second device, indicate an offset associated with at least one channel of the set of operating channels to identify the location of the at least one primary channel in the Op CW, and indicate an offset associated with the location of the at least one primary channel in the Op CW to identify a location of the set of operating channels. The processing system 810 may be configured to perform one or more functions discussed above with respect to blocks 705, 710, 715, 720, and 725 of FIG. 7. The processing system 810 may correspond to the processor 204. The wireless communication device 800 may further include a transmitter 815 configured to indicate the set of operating channels to the second device, indicate an offset associated with at least one channel of the set of operating channels to identify the location of the at least one primary channel in the Op CW, and indicate an offset associated with the location of the at least one primary channel in the Op CW to identify a location of the set of operating channels. The transmitter 815 may be configured to perform one or more functions discussed above with respect to blocks 715, 720, and 725 of FIG. 7. The transmitter 815 may correspond to the transmitter 210.

Moreover, in one aspect, means for setting a location of at least one primary channel in an operating channel width (Op CW) on which a second apparatus is allowed to communicate with a first apparatus may comprise the processing system 810 executing one or more algorithms. For example, the processing system 810 setting up a basic service set (BSS) may determine a set of allowed operating channels for the BSS (e.g., BSS Operating Channel Width (BSS Op CW)). Once the BSS Op CW is determined, the processing system 810 may set a location of a primary channel within the BSS Op CW and define remaining channels in the BSS Op CW as secondary channels.

In another aspect, means for defining a set of operating channels independent of the Op CW may comprise the processing system 810 executing one or more algorithms. For example, the processing system 810 may determine a number of channels available to the second apparatus to communicate with the first apparatus. Once the number of available channels is determined, the processing system 810 may define the set of operating channels to include at least one channel via which the second apparatus is allowed to change the location of the at least one primary channel to communicate with the first apparatus based on the number of available channels.

In a further aspect, means for indicating the set of operating channels to the second apparatus may comprise the processing system 810 and the transmitter 815 executing one or more algorithms. For example, as stated above, the processing system 810 may determine a number of channels available to the second apparatus to communicate with the first apparatus. Once the number of available channels is determined, the processing system 810 may define the set of operating channels to include at least one channel via which the second apparatus is allowed to change the location of the at least one primary channel to communicate with the first apparatus based on the number of available channels. Thereafter, the transmitter 815 may be executed by the processing system 810 to indicate the set of operating channels to the second apparatus.

In an aspect, means for indicating an offset associated with at least one channel of the set of operating channels to identify the location of the at least one primary channel in the Op CW, means for indicating an offset associated with the location of the at least one primary channel in the Op CW to identify a location of the set of operating channels, and means for indicating an offset associated with at least one channel specified by a bitmap to identify a location of at least one primary channel in the Op CW may comprise the processing system 810 and the transmitter 815 executing one or more algorithms. For example, as stated above, the processing system 810 may determine the location of at least one primary channel in an operating channel width (Op CW) and define the set of operating channels independent of the Op CW. Thereafter, the processing system 810 may compare the location of the at least one primary channel to a location of at least one channel in the set of operating channels, and determine a first offset with respect to the at least one channel of the set of operating channels that helps identify the location of the at least one primary channel. Thereafter, the transmitter 815 may be executed by the processing system 810 to indicate the first offset to the second apparatus. Alternatively, the processing system 810 may compare the location of the at least one primary channel to the location of the at least one channel in the set of operating channels, and determine a second offset with respect to the location of the at least one primary channel that helps identify the location of the set of operating channels. Thereafter, the transmitter 815 may be executed by the processing system 810 to indicate the second offset to the second apparatus. In another example, the processing system 810 may define the set of operating channels according to a bitmap, wherein each bit identifies a channel of the set of operating channels. Once the bitmap is defined, the processing 810 may determine a third offset with respect to at least one channel of the bitmap that helps identify a location of the at least one primary channel. Thereafter, the transmitter 815 may be executed by the processing system 810 to indicate the third offset to the second apparatus.

As used herein, the term "defining" encompasses a wide variety of actions. For example, "defining" may include resolving, selecting, choosing, establishing and the like. Further, a "channel width" as used herein may encompass or may also be referred to as a bandwidth in certain aspects.

As used herein, a phrase referring to "at least one of" a list of items refers to any combination of those items, including single members. As an example, "at least one of: a, b, or c" is intended to cover: a, b, c, a-b, a-c, b-c, and a-b-c.

The various operations of methods described above may be performed by any suitable means capable of performing the operations, such as various hardware and/or software component(s), circuits, and/or module(s). Generally, any operations illustrated in the Figures may be performed by corresponding functional means capable of performing the operations.

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

In one or more aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Thus, in some aspects computer readable medium may comprise non-transitory computer readable medium (e.g., tangible media). In addition, in some aspects computer readable medium may comprise transitory computer readable medium (e.g., a signal). Combinations of the above should also be included within the scope of computer-readable media.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware or any combination thereof. If implemented in software, the functions may be stored as one or more instructions on a computer-readable medium. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray® disc where disks usually reproduce data magnetically, while discs reproduce data optically with lasers.

Thus, certain aspects may comprise a computer program product for performing the operations presented herein. For example, such a computer program product may comprise a computer readable medium having instructions stored (and/or encoded) thereon, the instructions being executable by one or more processors to perform the operations described herein. For certain aspects, the computer program product may include packaging material.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the present invention is defined and limited only by the scope of appended claims 1-15.

## Claims

1. A method (700) of wireless communication at a first apparatus (104), comprising:
setting (705) a location of at least one primary channel (530) in a basic service set operating channel width, Op CW, on which a second apparatus (106) is allowed to communicate with the first apparatus;
defining (210) a set of operating channels (510) for a subchannel selective transmission procedure independent of the Op CW, the set of operating channels comprising at least one channel via which the second apparatus is allowed to change the location of the at least one primary channel (530) to communicate with the first apparatus; and
indicating (715) the set of operating channels to the second apparatus.

2. The method (700) of claim 1, wherein the set of operating channels (510) is defined based on a number of channels available to the second apparatus to communicate with the first apparatus.

3. The method (700) of claim 1, wherein at least one channel associated with the Op CW is associated with the set of operating channels.

4. The method (700) of claim 1, wherein no channel associated with the Op CW is associated with the set of operating channels.

5. The method (700) of claim 1, further comprising:
indicating (720) an offset associated with at least one channel of the set of operating channels to identify the location of the at least one primary channel (530) in the Op CW.

6. The method (700) of claim 1, further comprising:
indicating (725) an offset associated with the location of the at least one primary channel in the Op CW to identify a location of the set of operating channels.

7. The method (700) of claim 1, wherein the indicating (715) the set of operating channels to the second apparatus comprises:
indicating a location of each of the at least one channel of the set of operating channels via a channel activity bitmap, CAB, wherein the CAB comprises at least one bit, each bit identifying a channel of the set of operating channels.

8. The method (700) of claim 7, wherein the CAB comprises 16 bits, each bit identifying a 1-MHz channel of the set of operating channels.

9. The method (700) of claim 7, wherein the CAB comprises 8 bits, each bit identifying a X-MHz channel of the set of operating channels, where X is a width of the at least one primary channel in the Op CW.

10. The method (700) of claim 1, wherein the indicating (715) the set of operating channels to the second apparatus comprises:
indicating a bitmap specifying a number of channels enabled for communication.

11. The method (700) of claim 10, further comprising:
indicating (720) an offset associated with at least one channel specified by the bitmap to identify the location of the at least one primary channel in the Op CW.

12. The method (700) of claim 10, wherein the indicating (715) the set of operating channels to the second apparatus comprises:
indicating a bandwidth of each channel specified by the bitmap.

13. The method (700) of claim 1, wherein the indicating (715) the set of operating channels to the second apparatus comprises:
indicating a maximum bandwidth for the second apparatus to transmit a data unit.

14. A first apparatus (104, 800) for wireless communication, comprising:
means for setting a location of at least one primary channel (530) in a basic service set operating channel width, Op CW, on which a second apparatus (106) is allowed to communicate with the first apparatus;
means for defining a set of operating channels (510) for a subchannel selective transmission procedure independent of the Op CW, the set of operating channels comprising at least one channel via which the second apparatus is allowed to change the location of the at least one primary channel to communicate with the first apparatus; and
means (815) for indicating the set of operating channels to the second apparatus.

15. The first apparatus (104, 800) of claim 14, further comprising:
means for indicating an offset associated with at least one channel of the set of operating channels to identify the location of the at least one primary channel (530) in the Op CW or an offset associated with the location of the at least one primary channel (530) in the Op CW to identify a location of the set of operating channels.

## Patentansprüche

1. Ein Verfahren (700) zur Drahtloskommunikation an einer ersten Vorrichtung (104), das Folgendes aufweist:
Einstellen (705) einer Position wenigstens eines primären Kanals (530) in einer Basic-Service-Set-Betriebskanalbreite bzw. BSS Op-CW (BSS = basic service set, Op CW= operating channel width) auf der es einer zweiten Vorrichtung (106) gestattet ist, mit der ersten Vorrichtung zu kommunizieren;
Definieren (210) eines Satzes von Betriebskanälen (510) für eine subkanalselektive Sendeprozedur unabhängig von der Op CW, wobei der Satz von Betriebskanälen wenigstens einen Kanal aufweist, über den es der zweiten Vorrichtung gestattet ist, die Position des wenigstens einen primären Kanals (530) zum Kommunizieren mit der ersten Vorrichtung zu ändern; und Anzeigen (715) des Satzes von Betriebskanälen an die zweite Vorrichtung.

2. Verfahren (700) nach Anspruch 1, wobei der Satz von Betriebskanälen (510) basierend auf einer Anzahl von Kanälen definiert ist, die für die zweite Vorrichtung zum Kommunizieren mit der ersten Vorrichtung verfügbar sind.

3. Verfahren (700) nach Anspruch 1, wobei der wenigstens eine Kanal, der mit der Op CW assoziiert ist, mit dem Satz von Betriebskanälen assoziiert ist.

4. Verfahren (700) nach Anspruch 1, wobei kein Kanal mit der Op CW assoziiert ist, die mit dem Satz von Betriebskanälen assoziiert ist.

5. Verfahren (700) nach Anspruch 1, das weiter Folgendes aufweist:
Anzeigen (720) eines Versatzes bzw. Offsets, der mit wenigstens einem Kanal des Satzes von Betriebskanälen assoziiert ist zum Identifizieren der Position des wenigstens einen primären Kanals (530) in der Op CW.

6. Verfahren (700) nach Anspruch 1, das weiter Folgendes aufweist:
Anzeigen (725) eines Versatzes bzw. Offsets, der mit der Position des wenigstens einen primären Kanals in der Op CW assoziiert ist, zum Identifizieren einer Position des Satzes von Betriebskanälen.

7. Verfahren (700) nach Anspruch 1, wobei das Anzeigen (715) des Satzes von Betriebskanälen an die zweite Vorrichtung Folgendes aufweist:
Anzeigen einer Position jedes des wenigstens einen Kanals des Satzes von Betriebskanälen über eine Kanalaktivitäts-Bitmap bzw. CAB (CAB = channel activity bitmap), wobei die CAB wenigstens ein Bit aufweist, wobei jedes Bit einen Kanal des Satzes von Betriebskanälen identifiziert.

8. Verfahren (700) nach Anspruch 7, wobei die CAB 16 Bits aufweist, wobei jedes Bit einen 1-MHz-Kanal des Satzes von Betriebskanälen identifiziert.

9. Verfahren (700) nach Anspruch 7, wobei die CAB 8 Bits aufweist, wobei jedes Bit einen X-MHz-Kanal des Satzes von Betriebskanälen identifiziert, wobei X eine Breite des wenigstens einen primären Kanals in der Op CW ist.

10. Verfahren (700) nach Anspruch 1, wobei das Anzeigen (715) des Satzes von Betriebskanälen an die zweite Vorrichtung Folgendes aufweist:
Anzeigen einer Bitmap, die eine Anzahl von Kanälen spezifiziert, die zur Kommunikation freigegeben sind.

11. Verfahren (700) nach Anspruch 10, das weiter Folgendes aufweist:
Anzeigen (720) eines Versatzes bzw. Offsets, der mit wenigstens einem Kanal assoziiert ist, der durch die Bitmap spezifiziert ist, zum Identifizieren der Position des wenigstens einen primären Kanals in der Op CW.

12. Verfahren (700) nach Anspruch 10, wobei das Anzeigen (715) des Satzes von Betriebskanälen an die zweite Vorrichtung Folgendes aufweist:
Anzeigen einer Bandbreite jedes Kanals, der durch die Bitmap spezifiziert ist.

13. Verfahren (700) nach Anspruch 1, wobei das Anzeigen (715) des Satzes von Betriebskanälen an die zweite Vorrichtung Folgendes aufweist:
Anzeigen einer maximalen Bandbreite für die zweite Vorrichtung zum Senden einer Dateneinheit.

14. Eine erste Vorrichtung (104, 800) zur Drahtloskommunikation, die Folgendes aufweist:
Mittel zum Einstellen einer Position wenigstens eines primären Kanals (530) in einer Basic-Service-Set-Betriebskanalbreite bzw. BSS Op CW (BSS = basic service set, Op CW= operating channel width) auf der es einer zweiten Vorrichtung (106) gestattet ist, mit der ersten Vorrichtung zu kommunizieren;
Mittel zum Definieren eines Satzes von Betriebskanälen (510) für eine subkanalselektive Sendeprozedur unabhängig von der Op CW, wobei der Satz von Betriebskanälen wenigstens einen Kanal aufweist, über den es der zweiten Vorrichtung gestattet ist, die Position des wenigstens einen primären Kanals zum Kommunizieren mit der ersten Vorrichtung zu ändern; und
Mittel (815) Anzeigen des Satzes von Betriebskanälen an die zweite Vorrichtung.

15. Erste Vorrichtung (104, 800) nach Anspruch 14, die weiter Folgendes aufweist:
Mittel zum Anzeigen eines Versatzes bzw. Offsets, der mit wenigstens einem Kanal des Satzes von Betriebskanälen assoziiert ist, zum Identifizieren der Position des wenigstens einen primären Kanals (530) in der Op CW oder eines Versatzes bzw. Offsets, der mit der Position des wenigstens einen primären Kanals (530) in der Op CW assoziiert ist zum Identifizieren einer Position des Satzes von Betriebskanälen.

## Revendications

1. Procédé (700) de communication sans fil au niveau d'un premier dispositif (104), comprenant :
établir (705) un emplacement d'au moins un canal primaire (530) dans une largeur de canal d'exploitation, Op CW, d'ensemble de services de base sur lequel un deuxième dispositif (106) est autorisé à communiquer avec le premier dispositif ;
définir (210) un ensemble de canaux d'exploitation (510) pour une procédure de transmission sélective de sous-canal indépendante de l'Op CW, l'ensemble de canaux d'exploitation comprenant au moins un canal par l'intermédiaire duquel le deuxième dispositif est autorisé à changer l'emplacement dudit au moins un canal primaire (530) pour communiquer avec le premier dispositif ; et
indiquer (715) l'ensemble de canaux d'exploitation au deuxième dispositif.

2. Procédé (700) selon la revendication 1, dans lequel l'ensemble de canaux d'exploitation (510) est défini sur la base d'un nombre de canaux disponibles pour que le deuxième dispositif communique avec le premier dispositif.

3. Procédé (700) selon la revendication 1, dans lequel au moins un canal associé à l'Op CW est associé à l'ensemble de canaux d'exploitation.

4. Procédé (700) selon la revendication 1, dans lequel aucun canal associé à l'Op CW n'est associé à l'ensemble de canaux d'exploitation.

5. Procédé (700) selon la revendication 1, comprenant en outre :
indiquer (720) un décalage associé à au moins un canal de l'ensemble de canaux d'exploitation pour identifier l'emplacement dudit au moins un canal primaire (530) dans l'Op CW.

6. Procédé (700) selon la revendication 1, comprenant en outre :
indiquer (725) un décalage associé à l'emplacement dudit au moins un canal primaire dans l'Op CW pour identifier un emplacement de l'ensemble de canaux d'exploitation.

7. Procédé (700) selon la revendication 1, dans lequel l'indication (715) de l'ensemble de canaux d'exploitation au deuxième dispositif comprend :
indiquer un emplacement de chacun desdits au moins un canal de l'ensemble de canaux d'exploitation par l'intermédiaire d'une carte de bits d'activité de canal, CAB, la CAB comprenant au moins un bit, chaque bit identifiant un canal de l'ensemble de canaux d'exploitation.

8. Procédé (700) selon la revendication 7, dans lequel la CAB comprend 16 bits, chaque bit identifiant un canal de 1 MHz de l'ensemble de canaux d'exploitation.

9. Procédé (700) selon la revendication 7, dans lequel la CAB comprend 8 bits, chaque bit identifiant un canal de XMHz de l'ensemble de canaux d'exploitation, X étant la largeur dudit au moins un canal primaire dans l'Op CW.

10. Procédé (700) selon la revendication 1, dans lequel l'indication (715) de l'ensemble de canaux d'exploitation au deuxième dispositif comprend :
indiquer une carte de bits spécifiant un nombre de canaux activés pour la communication.

11. Procédé (700) selon la revendication 10, comprenant en outre :
indiquer (720) un décalage associé à au moins un canal spécifié par la carte de bits pour identifier l'emplacement dudit au moins un canal primaire dans l'Op CW.

12. Procédé (700) selon la revendication 10, dans lequel l'indication (715) de l'ensemble de canaux d'exploitation au deuxième dispositif comprend :
indiquer une largeur de bande de chaque canal spécifié par la carte de bits.

13. Procédé (700) selon la revendication 1, dans lequel l'indication (715) de l'ensemble de canaux d'exploitation au deuxième dispositif comprend :
indiquer une largeur de bande maximum pour que le deuxième dispositif émette une unité de données.

14. Premier dispositif (104, 800) pour des communications sans fil, comprenant :
des moyens pour établir un emplacement d'au moins un canal primaire (530) dans une largeur de canal d'exploitation, Op CW, d'ensemble de services de base sur lequel un deuxième dispositif (106) est autorisé à communiquer avec le premier dispositif ;
des moyens pour définir un ensemble de canaux d'exploitation (510) pour une procédure de transmission sélective de sous-canal indépendante de l'Op CW, l'ensemble de canaux d'exploitation comprenant au moins un canal par l'intermédiaire duquel le deuxième dispositif est autorisé à changer l'emplacement dudit au moins un canal primaire pour communiquer avec le premier dispositif ; et
des moyens (815) pour indiquer l'ensemble de canaux d'exploitation au deuxième dispositif.

15. Premier dispositif (104, 800) selon la revendication 14, comprenant en outre :
des moyens pour indiquer un décalage associé à au moins un canal de l'ensemble de canaux d'exploitation pour identifier l'emplacement dudit au moins un canal primaire (530) dans l'Op CW, ou un décalage associé à l'emplacement dudit au moins un canal primaire (530) dans l'Op CW pour identifier un emplacement de l'ensemble de canaux d'exploitation.
